## Europäisches Patentamt
## European Patent Office
## Office européen des brevets

(11) Veröffentlichungsnummer: **0 117 527**
A2

# EUROPÄISCHE PATENTANMELDUNG

(21) Anmeldenummer: **84101872.4**

(22) Anmeldetag: **22.02.84**

(51) Int. Cl.³: **B 25 H 1/00,** B 23 B 47/28, B 23 B 49/02

(30) Priorität: **25.02.83 DE 3306563**

(43) Veröffentlichungstag der Anmeldung: **05.09.84** Patentblatt 84/36

(84) Benannte Vertragsstaaten: **AT CH DE FR GB IT LI NL SE**

(71) Anmelder: **Becher, Reinhard, Engelbergstrasse 42, D-7000 Stuttgart 31 (DE)**

(72) Erfinder: **Becher, Reinhard, Engelbergstrasse 42, D-7000 Stuttgart 31 (DE)**

(54) Bohrhilfsgerät.

(57) Das Bohrhilfsgerät dient zum staubfreien Herstellen von geraden, tiefengenauen Bohrlöchern in Wände usw. und zur Herstellung miteinander fluchtender Bohrlöcher beim rechtwinkeligen Verbinden von Brettern mittels Stiften.

Das Bohrhilfsgerät besteht aus einer rechtwinkeligen Platte (1) mit einem im Winkel von 90° nach oben verlaufenden hohlzylinderförmigen Hals (12) in dem eine ebenfalls hohlzylinderförmige Verlängerung (13) geführt wird. Auf die Unterseite der Platte (1) ist ein mit einem Moosgummibelag (26) versehener Deckel (25) aufsteckbar. Bei eingesetzter Bohrmaschine liegt der Bohrmaschinenhals an dem Ring (22) an und der Bohrer wird durch eine in der Platte (1) eingesteckte Bohrbuchse geführt. So entsteht ein Behälter, aus dem kein Bohrstaub entweichen kann und durch die doppelte Führung der Bohrmaschine entstehen gerade Bohrlöcher. Durch in die Platte (1) einsteckbarer Stifte (9) können bei rechtwinkelig zu verbindenden Brettern die Bohrlöcher an allen Brettern mit demselben Abstand zur Längs- und Querkante gebohrt werden. Eine an der Verlängerung angebrachte Tiefenskala (20) und ein Feststellring (21) ermöglichen ein genaues Einstellen der Bohrtiefe.

0117527

## Bohrhilfsgerät

Die Erfindung betrifft ein Bohrhilfsgerät zum tiefengenauen und staubfreien Herstellen von rechtwinkeligen Bohrlöchern in Wände, Decken und Böden und zur Herstellung von tiefengenauen, geraden und miteinander fluchtenden Bohrlöchern in durch Stifte oder Riffeldübel rechtwinkelig zu verbindende Bretter.

Zum staubfreien Bohren in Wände und Decken sind verschiedene Geräte bekannt, die alle den Nachteil haben, daß die an der Wand anliegende Fläche starr ist, sodaß sich bei unebener Wandfläche Zwischenräume bilden können, durch die Staub austreten kann.

Die unter dem dt. GM 80 16 383 bekannte Vorrichtung zum rechtwinkeligen Bohren kann nur mit drei Fingern gehalten werden und ist do unterdimensioniert,daß durch die Hebelwirkung der Bohrmaschine die Vorrichtung leicht aus dem rechten Winkel zu bringen ist.Auch kann durch den kleinen Fuß ein Verrutschen beim Anbohren nicht verhindert werden.

Zur Herstellung miteinander fluchtender Bohrlöcher beim rechtwinkeligen Verbinden von Brettern mittels Stiften (Stirnseite des einen Brettes mit der Flächenseite des anderen Brettes), sind verschiedene Arten von Bohrlehren bekannt. Manche Geräte haben den Nachteil, daß sie nicht gut genug an dem Brett fixiert werden können und sich beim Anbohren verschieben. Bei allen Geräten wird nur der Bohrer geführt und zwar mittels einer Bohrbuchse. Dies reicht jedoch nicht aus, um mit Sicherheit gerade und somit miteinander fluchtende Bohrlöcher zu erzielen. Außerdem ist es bei keinem Gerät möglich, die Bohrtiefe einzustellen.

Hier will die Erfindung Abhilfe schaffen. Die Erfindung, wie sie in den Ansprüchen gekennzeichnet ist, löst die

0117527

Aufgabe, ein Bohrhilfsgerät zu schaffen, mit dem der beim Bohren in Wände und Decken austretende Staub vollkommen aufgefangen werden kann, mit dem weiter in Wände und Decken sicher rechtwinkelige und tiefengenaue Löcher erzielt werden können und mit dem zusätzlich noch an mittels Stiften rechtwinkelig zu verbindenden Brettern gerade, tiefengenaue und miteinander fluchtende Bohrlöcher verschiebesicher angebracht werden können, sodaß sich bündige Kanten ergeben.

Die durch die Erfindung erreichten Vorteile sind im wesentlichen darin zu sehen, daß beim Bohren in Wände, Decken usw. der Bohrer beim Anbohren nicht mehr verlaufen kann, daß rechtwinkelig zur Wand verlaufende Löcher erzielt werden die gleichzeitig auch noch staubfrei hergestellt werden können  selbst wenn die Wand uneben ist und daß mit demselben Gerät beim Bohren in Bretter immer gerade und tiefengenaue Löcher erzielt werden, die an allen Brettern denselben Abstand zur Längs- und Querkante aufweisen.

Im folgenden wird die Erfindung anhand von Zeichnungen näher erläutert. Es zeigt

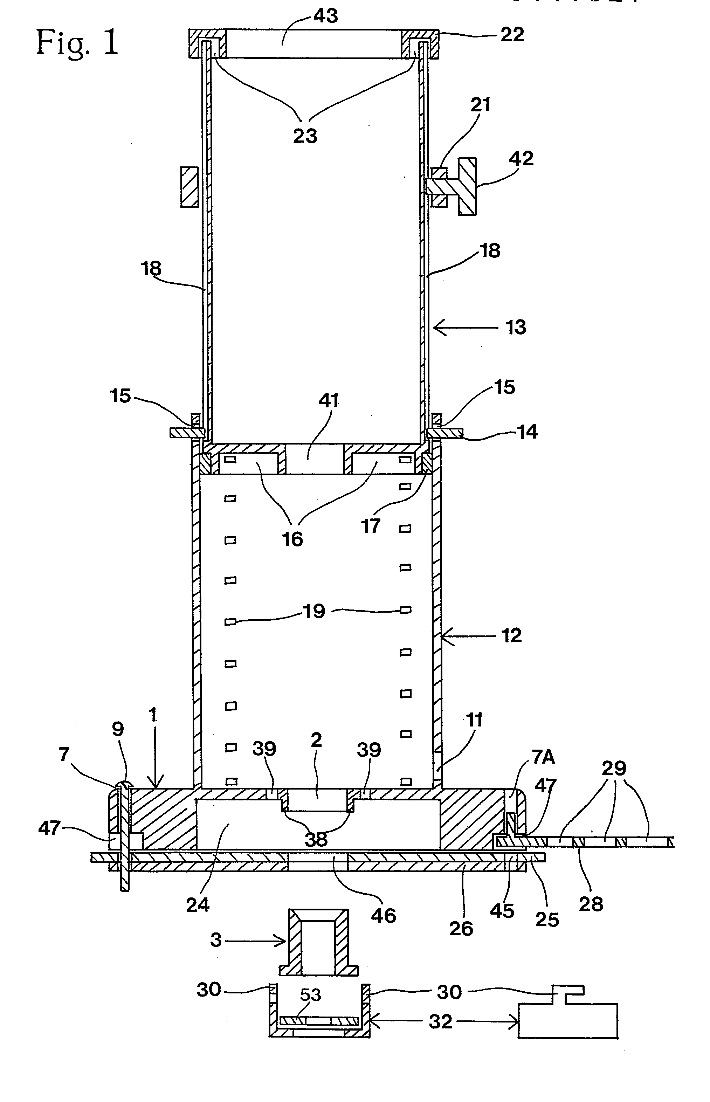

Figur 1 einen Querschnitt des Bohrhilfsgerätes entlang der Längsachse und die Seitenansicht der um 90$^{\circ}$ gedrehten Überwurfmutter,

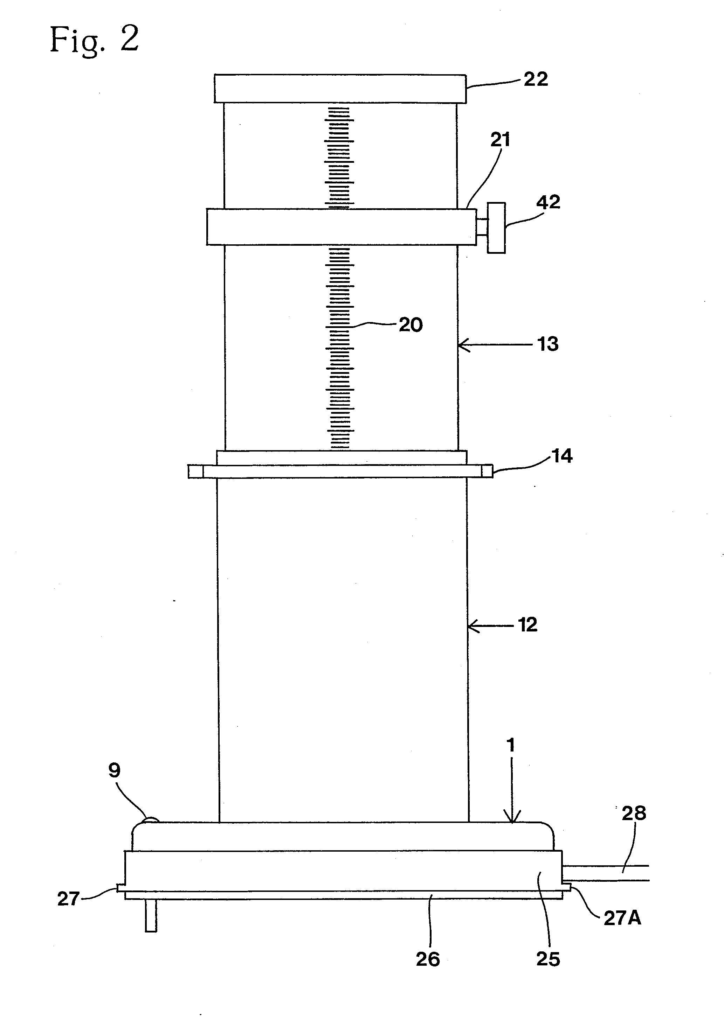

Figur 2 eine Seitenansicht des Bohrhilfsgerätes,

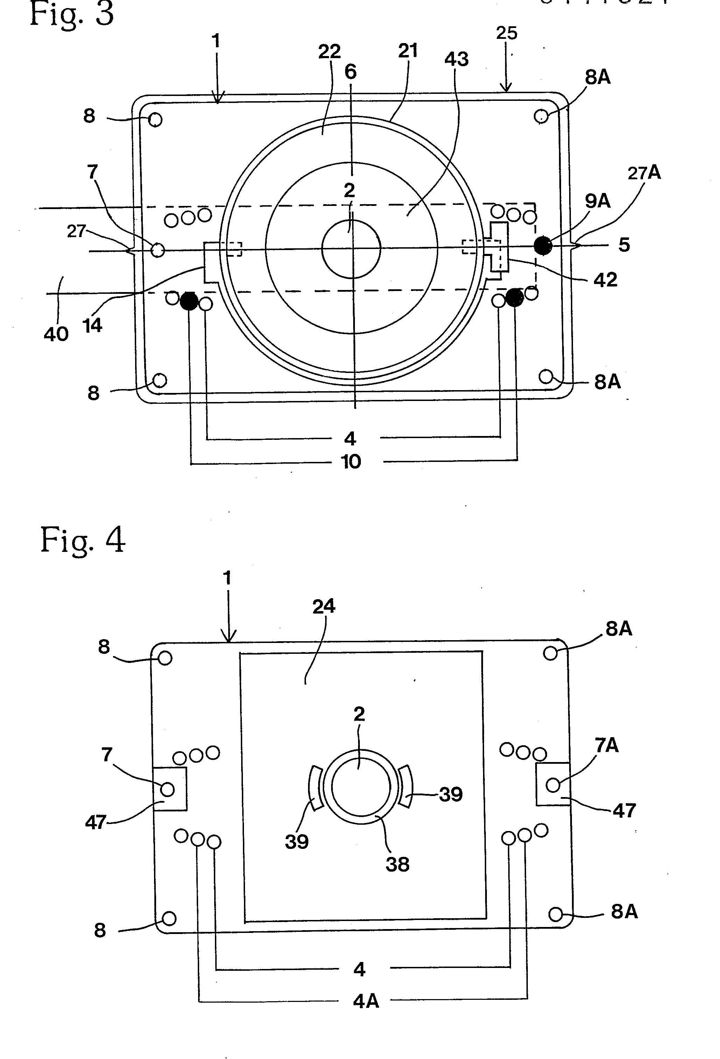

Figur 3 das Bohrhilfsgerät ohne Bohrbuchse und Überwurfmutter, aufgesetzt auf die Stirnseite eines Brettes, aus der Sicht von oben,

Figur 4 das Bohrhilfsgerät ohne Bohrbuchse, Überwurfmutter und Deckel, aus der Sicht von unten (Plattenunterseite),

- 3 -

0117527

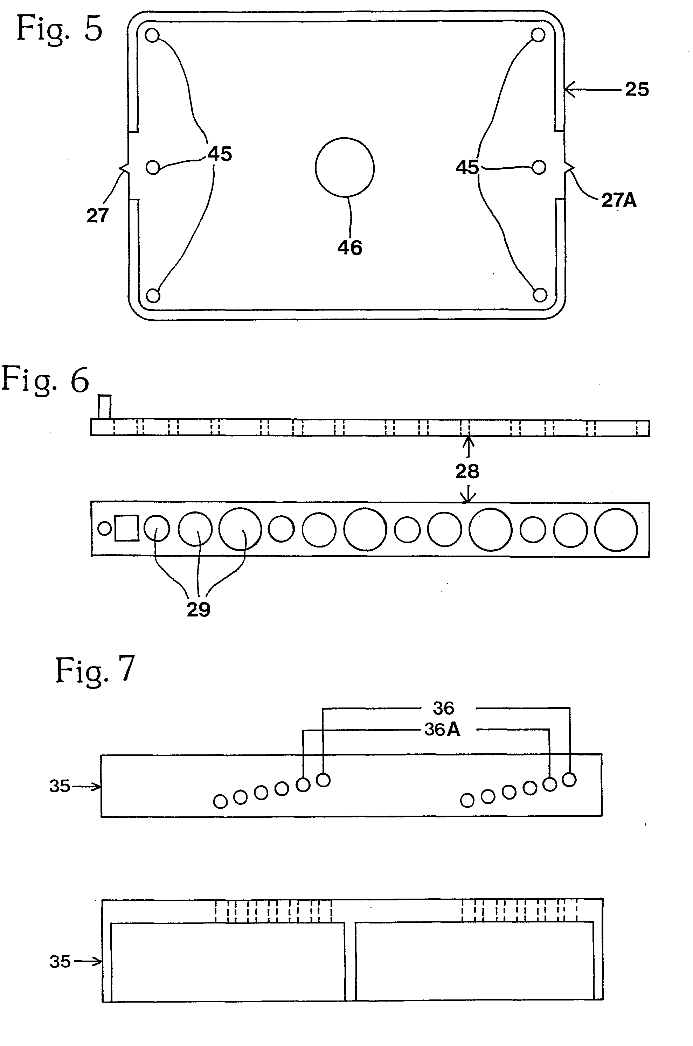

Figur 5 den Deckel aus der Sicht von oben,

Figur 6 die Abstandsleiste aus seitlicher Sicht und
aus der Sicht von oben,

Figur 7 die von unten an das Bohrhilfsgerät ansteckbare Leiste aus der Sicht von oben und aus seitlicher
Sicht,

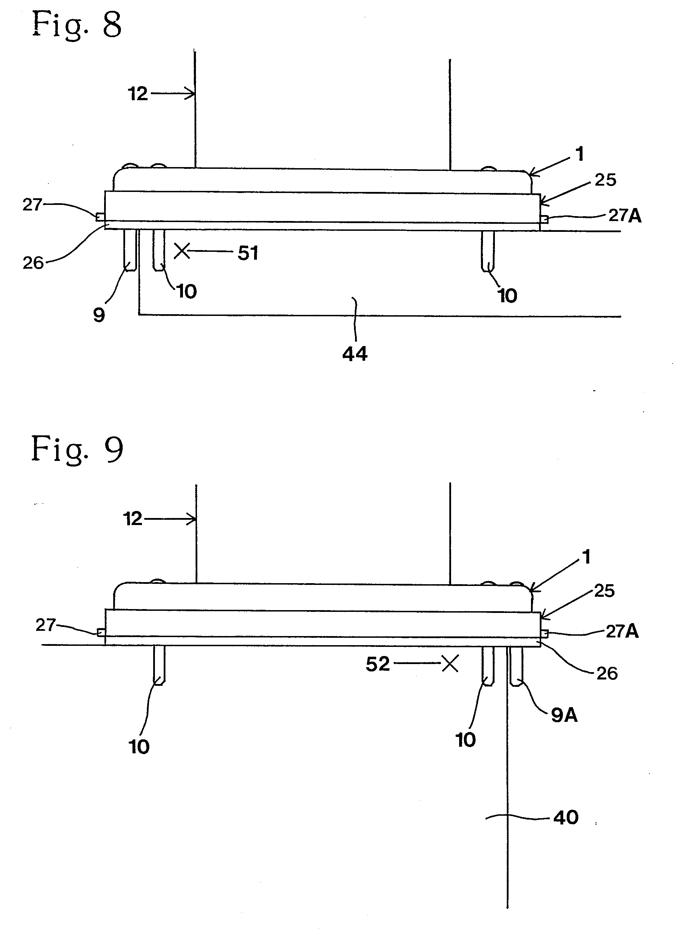

Figur 8 das Bohrhilfsgerät im Ausschnitt, aufgesetzt
auf die Flächenseite eines Brettes, aus seitlicher
Sicht,

Figur 9 das Bohrhilfsgerät im Ausschnitt, aufgesetzt
auf die Stirnseite eines Brettes, aus seitlicher Sicht,

Figur 10 die Platte mit drehbar gelagertem Hals aus
der Sicht von oben,

Figur 11 die Bohrbuchse in der in einen Mantel eingebetteten Ausführung, gesehen im Querschnitt und aus
der Sicht von oben.

In den Figuren ist das Bohrhilfsgerät dargestellt,
welches in seinem grundsätzlichen Aufbau aus einer
vorzugsweise rechteckigen Platte 1 mit einem rechtwinkelig nach oben verlaufenden Hals 12 und einer
in diesen Hals 12 hineinschiebbaren hohlzylinderförmigen
Verlängerung 13 besteht.

Die Platte 1 weist mittig eine runde Durchbrechung 2
auf, die zum Einsetzen einer auswechselbaren Bohrbuchse
3 vorgesehen ist. Ausgehend vom Plattenboden befindet
sich um die mittige Durchbrechung 2 herum eine Vertiefung 24, in welche ein an der mittigen Durchbrechung 2
beginnender Halsansatz 38 teilweise hineinragt. Die
mit einem Bund versehene Bohrbuchse 3 wird von der Plattenunterseite aus in die passgenaue mittige Durchbrechung 2 hineingeschoben, bis der Bund an den Halsansatz 38 stößt. Der Bund überlappt den Halsansatz 38, damit die Bohrbuchse besser entfernt werden kann. Der Bohrbuchsenbund wird von einer Überwurfmutter 32 übergriffen, deren mittige Öffnung mindestens so weit ist wie die Öffnung der Bohrbuchse 3. Die Überwurfmutter weist zwei hakenförmige Ansätze 30 auf, die durch zwei in der Plattendecke befindliche Öffnungen 39 geführt und durch Drehen der Überwurfmutter 32 mit der Plattendecke verbunden werden. Zwischen die Bohrbuchse 3 und die Überwurfmutter 32 kann eine Gummischeibe 53 gelegt werden, die ein mittiges Loch aufweist.

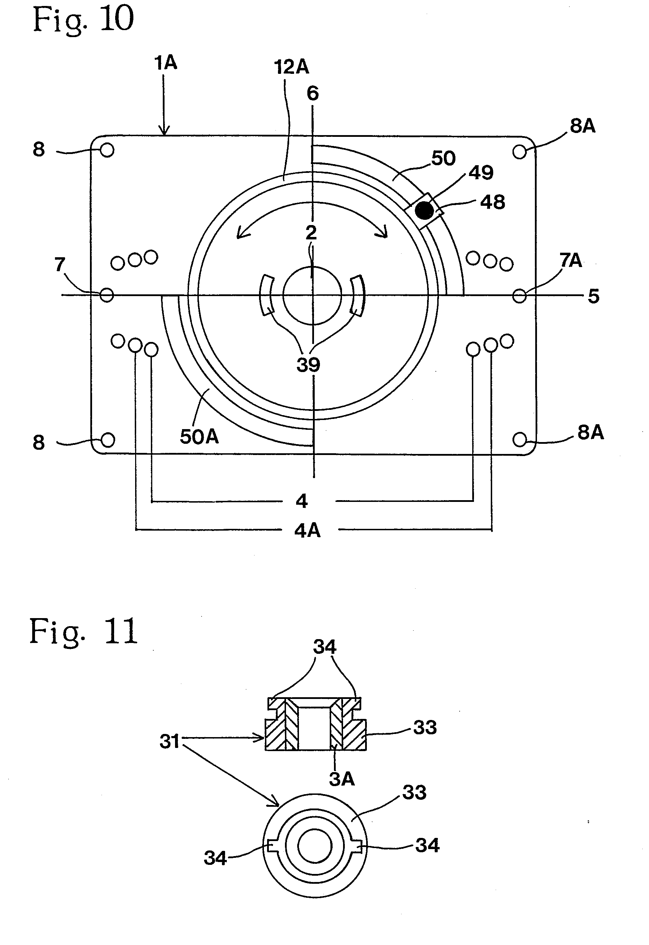

Eine andere Ausgestaltung der Erfindung zeigt eine Bohrbuchse 3A (Figur 11), die in einen vorzugsweise aus Kunststoff gefertigten Mantel 31 eingebettet ist, der am einen Rand einen geriffelten Bund 33 und am anderen Rand zwei gegenüberliegende Zapfen 34 aufweist. Der Abstand der Zapfen 34 zum Bund 33 entspricht der Stärke der Plattendecke. Bei dieser Ausführung muß die runde mittige Durchbrechung 2 noch um zwei Aussparungen erweitert werden, die den Zapfen 34 entsprechen. Das Teil kann nun mit den Zapfen 34 voraus in die mittige Durchbrechung 2 gesteckt und durch Drehen gesichert werden.

Von der Plattenoberseite aus erstreckt sich mittig und im Winkel von 90$^\circ$ nach oben ein hohlzylinderförmiger Hals 12, dessen Wand im Bereich der Halswurzel von einer Entlüftungsöffnung 11 durchbrochen sein kann. In diesen Hals 12 führt von oben eine ebenfalls hohlzylinderförmige Verlängerung 13, die an ihrer Außenseite zwei gegenüberliegende, senkrecht verlaufende Nuten 18 aufweist, welche knapp über dem unteren Rand enden. Die Wand des Halses 12 besitzt knapp unterhalb

0117527

ihres oberen Randes zwei gegenüberliegende Durchbrechungen 15. Mittels einer Klammer 14, deren Enden durch
die Wanddurchbrechungen 15 in die Nuten 18 der Verlängung 13 eingreifen, wird die Verlängerung 13 gegen das
völlige Herausziehen aus dem Hals 12 gesichert. Zwischen
der Plattendecke und dem Boden der Verlängerung 13 ist
eine Druckfeder eingesetzt, welche die Verlängerung 13
immer wieder in ihre Ausganslage zurückschiebt.

Der Boden der Verlängerung 13 besitzt in der Mitte eine
Öffnung 41 und an der Unterseite eine rundumlaufende
Nut 16. Die Wand der Verlängerung 13 ist am unteren
Rand verengt und mit einer rundumlaufenden Manschette
17 versehen, welche die Verlängerung 13 zum Hals 12
hin abdichtet. Die Verlängerung ist weiter mit einer
vertikal verlaufenden Skala 20 versehen, die anzeigt,
wie weit die Verlängerung 13 in den Hals 12 eingeschoben
ist. Zum Einstellen der Bohrtiefe ist ein Feststellring
21 vorgesehen, der die Verlängerung umspannt und mittels
einer Schraube 42 festgeklemmt werden kann. Nun kann die
Verlängerung 13 nur soweit in den Hals 12 geschoben
werden, bis der Feststellring 21 auf den Rand des
Halses 12 stößt.

Auf den oberen Rand der Verlängerung 13 ist ein Ring
22 gesteckt, dessen Öffnungsweite 43 der Stärke des
Bohrmaschinenhalses entspricht. Der Ring 22 wird an der
Verlängerung 13 mit Hilfe einer Nut 23 befestigt, deren
äußere Begrenzung dem äußeren Durchmesser der Verlängerung 13 entspricht und deren innere Begrenzung über den
inneren Durchmesser der Verlängerung 13 hinausreicht,
sodaß zwischen der Innenseite der Verlängerung 13 und
der inneren Begrenzung der Nut 23 ein Spalt entsteht.

Auf den Boden der Platte 1 kann ein Deckel 25 gesteckt
werden, dessen Seitenwände die Platte 1 an vier Seiten
teilweise umgreifen. Der Deckel 25 weist in der vertikalen Verlängerung der in der Platte 1 befindlichen mittigen Durchbrechung 2 und der Durchgangslöcher 4, 4A, 7, 7A, 8, 8A ebenfalls Durchbrechungen 45, 46 auf. Der Deckelboden ist an der Außenseite mit einem Moosgummibelag 26 oder dergleichen versehen. Am Deckelboden sind auf der Längsachse an beiden Seiten nach außen abstehende Nasen 27, 27A angebracht.

Die Bohrmaschine wird durch die Ringöffnung 43 in das Bohrhilfsgerät eingeführt, bis das Gehäuse auf den Ring 22 stößt. Durch Druck auf die Bohrmaschine wird die Verlängerung 13 in den Hals 12 geschoben, bis der Bohrer durch die Bohrbuchse 3 hindurchführend an der Deckelunterseite austritt. Der Bohrer wird an der Wand in der vorgesehenen Position angesetzt und dann das Bohrhilfsgerät an die Wand gedrückt. Der moosgummibelegte Deckel 25 gleicht Unebenheiten an der Wand aus. Es entsteht so ein geschlossener Behälter, der nur von der Entlüftungsöffnung 11 unterbrochen wird. Das Bohrhilfsgerät wird so angesetzt, daß die Entlüftungsöffnung 11 nicht nach unten gerichtet ist. Da die Bohrmaschine durch die Verlängerung 13 und die Bohrbuchse 3 doppelt geführt wird, kann der Bohrer genau recht-winkelig zur Wand angesetzt werden. Der Bohrer kann dadurch beim Anbohren nicht so leicht verlaufen und es werden gerade Bohrlöcher erzeugt. Der moosgummibelegte Deckel 25 dient auch dazu, daß das Bohrhilfsgerät beim Anbohren nicht verrutscht.

Der beim Bohren entstehende Staub wird zum größten Teil in dem zwischen Deckel 25 und Plattendecke entstandenen Hohlraum 24 aufgefangen. Die zwischen Bohrbuchse 3 und Überwurfmutter 32 eingesetzte Gummischeibe 53 besitzt mittig ein Loch, dessen Weite etwas geringer ist als die Stärke des Bohrers. Dadurch wird erreicht, daß möglichst wenig Bohrstaub in das Halsinnere gelangt. Dieser Staub wird in der Nut 16 im Boden der Verländer-

0117527

ung 13 gesammelt und mittels der Manschette 17 am Austreten zwischen Hals 12 und der Verlängerung 13 gehindert, was für ein einwandfreies Ineinanderlaufen sehr wichtig ist. Beim Bohren an der Decke kann es vorkommen, daß ein letzter Rest von Bohrstaub auch in das Innere der Verlängerung 13 gelangt. Dieser Bohrstaub wird von der in dem aufgesteckten Ring 22 befindlichen Nut 23 aufgefangen.

Die Entlüftungsöffnung 11 dient dazu, daß die durch das Zusammenschieben des Bohrhilfsgerätes komprimierte Luft entweichen kann. Wäre diese Entlüftungsöffnung 11 nicht vorhanden, so würde sich die Luft irgendwo einen Ausgang verschaffen und dort unter hohem Druck und unter Mitnahme von Staub austreten.

Parallel zur Längsachse 5 sind in der Platte 1 mehrere runde, vertikal verlaufende Durchgangslöcher 4, 4A angeordnet, von denen immer zwei, auf derselben Seite der Längsachse 5 liegend, den gleichen Abstand zur Längsachse 5 aufweisen. Dieser Abstand entspricht der halben Stärke des Brettes 40, das an seiner Stirnseite angebohrt werden soll. Wird das entsprechende Durchgangslochpaar 4, 4A mit Stiften 10 bestückt  die an der Deckelunterseite heraustreten und wird das Bohrhilfsgerät so auf die Stirnseite des Brettes 40 gesetzt, daß die Stifte 10 an der Längskante anliegen, so liegt das Zentrum der Bohrbuchse 3 genau auf der Mitte des Brettes 40. Da in der Platte 1 mehrere Durchgangslochpaare 4, 4A mit verschiedenen Abständen zur Längsachse 5 vorhanden sind, können verschieden starke Bretter mittig angebohrt werden. Wird das Bohrhilfsgerät mit derselben Einstellung an der Flächenseite des anderen Brettes 44 angelegt, so erfolgt die Bohrung im gleichen Abstand zur Längskante.

Die Platte 1 weist zu beiden Seiten der Querachse 6

0117527

und im gleichen Abstand dazu zwei weitere Durchgangslöcher 7, 7A auf, die vorzugsweise direkt durch die Längsachse 5 führen. Wird eines dieser Durchgangslöcher 7, 7A mit einem nach unten heraustretenden Stift 9, 9A bestückt, so kann dieser Stift 9, 9A an der Querkante der Bretter 40, 44 angelegt werden. Dadurch erzielt man an beiden Brettern 40, 44 denselben Abstand von der Querkante zum Bohrloch. Da das an der Stirnseite zu bebohrende Brett 40 zum Bohren um 180$^o$ gedreht werden muß, wird an beiden Brettern 40, 44 die Ausgangsposition durch Zeichen 51, 52 gekennzeichnet. Durch das Drehen des ersten Brettes 40 muß nun die erste Bohrung hier rechts und bei dem zweiten Brett 44 links erfolgen. Da jedoch beide an der Querkante anzulegenden Stifte 9, 9A denselben Abstand zum Zentrum aufweisen, erhält man an beiden Brettern 40, 44 denselben Abstand des Bohrloches zur Querkante.

Da das Bohrhilfsgerät immer an drei Brettseiten anliegt, kann es gut fixiert werden, sodaß es beim Anbohren nicht verrutscht. Beim Anlegen an der Stirnseite des Brettes 40 kann ein Stift 10 noch zusätzlich mit einer Schraubzwinge an dem Brett 40 befestigt werden. Infolge der doppelten Führung der Bohrmaschine erhält man auch hier gerade Bohrlöcher. Die Bohrtiefeneinstellung ist hier besonders wichtig und erfolgt durch Festklemmen des an der Skala 20 eingestellten Feststellringes 21.

Ist das erste Loch gebohrt, so wird in dieses ein passender Stift oder Riffeldübel gesteckt. Der zum Anlegen an der Querkante dienende Stift 9, 9A wird entfernt und in das frei werdende Durchgangsloch 7, 7A von unten die Abstandsleiste 28 eingesteckt. Damit diese Abstandsleiste 28 nicht vom Plattenboden absteht, weist dieser in diesen Bereichen zwei Ver-

0117527

tiefungen 47 auf. In einer anderen Ausgestaltung der Erfindung wird die Abstandsleiste 28 am Deckel 25 befestigt. Die Abstandsleiste 28 verläuft in der Verlängerung der Längsachse 5 der Platte 1 und weist in verschiedenen Abständen runde, vertikal verlaufende Durchgangslöcher 29 auf, deren Weiten den Weiten der Bohrlöcher entsprechen. Die Abstandsleiste 28 wird mit Hilfe eines dieser Durchgangslöcher 29 mit dem im ersten Bohrloch eingesteckten Stift verbunden. Man erhält so einen festen, unverrückbaren Abstand der Bohrlöcher.

In der Platte 1 sind zu beiden Seiten der Querachse 6 und im gleichen Abstand wie die Durchgangslöcher 7, 7A weitere runde, vertikal verlaufende Durchgangslöcher 8, 8A angeordnet. Sollen die Bohrungen auf der Flächenseite des zweiten Brettes 44 nun nicht entlang der Längskante sondern weiter in Richtung Brettmitte versetzt im rechten Winkel zur Querkante verlaufen, so werden diese zu beiden Seiten eines Durchgangsloches 7, 7A befindlichen Durchgangslöcher 8, 8A mit Stiften bestück. Das Bohrhilfsgerät wird so auf das Brett 44 gesetzt, daß diese Stifte an der Querkante anliegen und die gegenüberliegende, am Deckelboden angesetzte Nase 27 oder 27A auf eine vorher angezeichnete Anreißlinie gerichtet ist. Die Bohrung erfolgt jetzt genau durch die Anreißlinie. Der moosgummibelegte Deckel 25 verhindert ein Verschieben des Bohrhilfsgerätes. Die weiteren Bohrlöcher werden wieder mit Hilfe der Abstandsleiste 28 gebohrt.

Da die Bohrmaschinen verschiedene Halsstärken aufweisen, können verschiedene Ringe 22 vorgesehen werden, die entsprechende Öffnungen 43 besitzen.

Anstelle der verschiedenen Durchgangslochpaare 4, 4A in der Platte 1 kann nur ein Durchgangslochpaar vor-

0117527

gesehen sein. In diese Durchgangslöcher können Stifte gesteckt werden, die an der Unterseite heraustreten und eine rechtwinkelige Leiste 35 aufnehmen, die nun ihrerseits in der vertikalen Verlängerung der Durchgangslöcher in der Platte 1 mehrere Löcher 36, 36A aufweist, von denen immer zwei denselben Abstand zur Leistenkante haben. Der Abstand solcher zusammengehörender Löcher 36, 36A zueinander entspricht dem Abstand der in der Platte befindlichen Durchgangslöcher. Die Leiste 35 wird entsprechend der Brettstärke versetzt.

Dieses in der Platte 1 befindliche Lochpaar kann auch durch ein auf die Längsachse 5 zulaufendes Langlochpaar ersetzt werden. Hier kann nun von unten eine rechtwinkelige Leiste angesetzt und durch Schrauben festgeklemmt werden. Dadurch ist ein stufenlos einstellbarer Abstand zur Längsachse 5 möglich.

Bei einer anderen Ausgestaltung der Erfindung ist an einer Platte 1A ein drehbar gelagerter Hals 12A angesetzt. Dieser drehbare Hals 12A weist am unteren Rand einen nach außen gerichteten Ansatz 48 auf, der mit einem runden, vertikal verlaufenden Durchgangsloch versehen ist, in das ein Stift 49 gesteckt werden kann. Dieser Stift 49 greift in eine in der Platte 1A vorgesehene Durchbrechung 50 ein und tritt an der Plattenunterseite wieder aus. Die Durchbrechung 50 verläuft kreisbogenförmig von der Längsachse 5 bis zur Querachse 6. Eine zweite gleichverlaufende Durchbrechung 50A ist symmetrisch gegenüberliegend angeordnet. Bei dieser Ausführung ist es möglich, die Stirnwand eines Brettes 40 sogar von vier Seiten zu umfassen, indem nach dem Ansetzen des Bohrhilfsgerätes der Hals 12A so weit gedreht wird, bis der Stift 49 an der zweiten Längskante anliegt.

Das Bohrhilfsgerät besteht vorzugsweise aus Kunststoff.

0117527

Patentansprüche

1. Bohrhilfsgerät zum Herstellen von tiefengenauen, staubfreien und rechtwinkeligen Bohrlöchern in Wände, Decken usw. und zur Herstellung tiefengenauer, gerader und miteinander fluchtender Bohrlöcher in durch Stifte rechtwinkelig zu verbindende Bretter, mit rutschfestem Bodenbelag und unter Verwendung von Bohrbuchsen, dadurch gekennzeichnet, daß eine Platte (1) mittig eine runde Durchbrechung (2) zur Aufnahme von auswechselbaren Bohrbuchsen (3) aufweist und parallel zur Längsachse (5) verschiedene runde, vertikal verlaufende Durchgangslöcher (4, 4A) vorgesehen sind, von denen immer zwei denselben Abstand zur Längsachse (5) haben, daß zu beiden Seiten der Querachse (6) und im selben Abstand dazu mehrere runde, vertikal verlaufende Durchgangslöcher (7, 7A, 8, 8A) angeordnet sind und alle Durchgangslöcher (4, 4A, 7, 7A, 8, 8A) mit an der Plattenunterseite hervorstehenden Stiften (9, 9A, 10) bestückbar sind, daß die Platte(1)mittig und im Winkel von 90° nach oben verlaufend einen hohlzylinderförmigen Hals (12) aufweist, dessen Wand im Bereich der Halswurzel von einer Entlüftungsöffnung (11) durchbrochen ist und in den von oben eine ebenfalls hohlzylinderförmige Verlängerung (13) eingeführt ist, die mittels einer Klammer (14) gehalten wird deren Enden durch zwei unterhalb des oberen Halsrandes gegenüberliegend angeordnete Wandöffnungen (15) in zwei in der Verlängerung (13) vertikal verlaufende Nuten (18) eingreifen, die über dem unteren Rand der Verlängerung (13) enden, daß zwischen Halsboden und dem Boden der Verlängerung (13) eine Druckfeder angeordnet ist, daß die Wand der Verlängerung (13) am unteren Rand verengt und mit einer umlaufenden Manschette (17) gegenüber dem Hals (12) abgedichtet ist, daß der Boden der Verlängerung (13) mittig eine Öffnung (41) und in der Unterseite eine kreisförmige Nut (16) aufweist, daß die Verlängerung (13) außen mit einer vertikal verlaufenden Tiefenskala (20) versehen und von einem Feststellring (21) umspannt ist, der durch eine Schraube (42) an der Verlängerung (13) festgeklemmt wird, daß auf den oberen Rand der Verlängerung (13) ein Ring (22) gesteckt ist der eine kreisförmige Nut (23) aufweist, deren äußere Begrenzung dem äußeren Durchmesser der Verlängerung (13) entspricht und deren innere Begrenzung über den inneren Durchmesser der Verlängerung (13) hinausreicht, daß sich an der Plattenunterseite eine Vertiefung befindet, die sich um die mittige Durchbrechung (2) herum erstreckt, daß in diese Vertiefung (24) ein vom Rand der mittigen Durchbrechung (2) ausgehender Halsansatz (38) teilweise hineinreicht, daß auf die Unterseite der Platte (1) ein Deckel (25) gesteckt wird, dessen Wände die Platte (1) an vier Seiten teilweise umgreifen und daß dessen Bodenaußenseite mit einem Moosgummibelag (26) versehen ist, daß dieser Deckel in der vertikalen Verlängerung der in der Platte (1) befindlichen mittigen Durchbrechung (2) und der Durchgangslöcher (4, 4A, 7, 7A, 8, 8A) ebenfalls Durchbrechungen (45, 46) aufweist, daß an der Platte (1) oder dem Deckel (25) eine Abstandsleiste (28) angesteckt wird, die in der Verlängerung der Längsachse (5) der Platte (1) verläuft und in verschiedenen Abständen runde, vertikal verlaufende Durchgangslöcher (29) aufweist, deren Weiten den Weiten der zu bohrenden Löcher entspricht.

2. Bohrhilfsgerät nach Anspruch 1, bei dem die Bohrbuchse (3) mit einem Bund versehen ist, der den Halsansatz (38) überlappt, die Bohrbuchse (3) mit ihrem Hals genau in die mittige Durchbrechung (2) der Platte (1) paßt und durch eine Überwurfmutter (32) gesichert ist, die zwei hakenförmige Ansätze (30) aufweist, welche durch zwei in der Plattendecke befindliche Öffnungen (39) geführt und durch Drehen der Überwurfmutter (32) mit der Plattendecke verbunden werden.

3. Bohrhilfsgerät nach Anspruch 1 und 2, bei dem zwischen der Überwurfmutter (32) und der Bohrbuchse (3) eine Gummischeibe (53) einsetzbar ist, deren mittiges Loch in der Weite geringer ist als die Stärke des Bohrers.

4. Bohrhilfsgerät nach Anspruch 1, bei dem die Bohrbuchse (3A) von einem vorzugsweise aus Kunststoff hergestellten Mantel (31) umgeben ist, der am einen Rand einen geriffelten Bund (33) und am anderen Rand zwei gegenüberliegende Zapfen (34) aufweist, der Abstand der Zapfen (34) zum Bund (33) der Stärke der Plattendecke entspricht, der Hals des Mantels (31) in die mittige Durchbrechung (2) der Platte (1) paßt und an diese mittige Durchbrechung (2) zwei den Zapfen entsprechende Aussparungen angegliedert sind.

5. Bohrhilfsgerät nach Anspruch 1, 2, 3 und 4, bei dem in der Platte (1) anstatt der vielen entlang der Längsachse (5) angeordneten Durchgangslöcher (4, 4A) nur zwei Durchgangslöcher vorgesehen sind, die denselben Abstand zur Längsachse (5) aufweisen und durch welche nach unten herausstehende Stifte gesteckt werden können die eine an der Plattenunterseite angesetzte rechteckige Leiste (35) aufnehmen können, die nun ihrerseits in der vertikalen Verlängerung der in der Platte (1) angeordneten Durchgangslöcher mehrere Löcher (36, 36A) aufweist, von denen immer zwei denselben Abstand zur Leistenkante haben und

- 14 -                          0117527

der Abstand solcher zusammengehörender Löcher (36, 36A) zueinander dem Abstand der beiden Durchgangslöcher in der Platte (1) entspricht.

6. Bohrhilfsgerät nach Anspruch 1, 2, 3 und 4, bei dem in der Platte (1) anstatt der vielen entlang der Längsachse (5) angeordneten Durchgangslöcher (4, 4A) nur zwei Durchgangslöcher vorgesehen sind, die als Langlöcher ausgebildet sind und auf die Längsachse (5) zulaufen und an der Plattenunterseite eine rechtwinkelige Leiste angesetzt werden kann, die mittels durch die Langlöcher führender Schrauben mit entsprechenden Muttern befestigt werden kann.

7. Bohrhilfsgerät nach Anspruch 1, 2, 3, 4, 5 und 6, bei dem der an der Platte (1A) angesetzte und nach oben verlaufende Hals (12A) drehbar gelagert ist, der Hals (12A) am unteren Rand einen seitlich nach außen gerichteten Ansatz (48) mit einem runden, vertikal verlaufenden Durchgangsloch aufweist, in welches ein Stift (49) gesteckt werden kann, der in eine in der Platte (1A) vorgesehene und kreisbogenförmig von der Längsachse (5) bis zur Querachse (6) verlaufende Durchbrechung (50) eingreift und am Plattenboden hervorsteht und eine zweite gleichartige Durchbrechung (50A) der ersten Durchbrechung (50) symmetrisch gegenüberliegt.

8. Bohrhilfsgerät nach Anspruch 1, 2, 3, 4, 5, 6 und 7, bei dem die Verlängerung (13) nicht direkt durch den Hals (12) sondern durch einen auf den Hals (12) gesteckten Ring geführt wird.

9. Bohrhilfsgerät nach Anspruch 1, 2, 3, 4, 5, 6, 7, und 8, bei dem die Bohrbuchse (3) nicht in der Platte (1) sondern im Deckel (25) befestigt wird.

Fig. 1

$-1/6$

0117527

Fig. 2

**Fig. 3**

**Fig. 4**

Fig. 5

Fig. 6

Fig. 7

0117527

Fig. 8

Fig. 9

Fig. 10

Fig. 11